# EUROPÄISCHE PATENTSCHRIFT

(11) **EP 1 663 048 B1**
(45) Veröffentlichungstag und Bekanntmachung des Hinweises auf die Patenterteilung: **07.01.2009**
(21) Anmeldenummer: 04764831.6
(22) Anmeldetag: 04.09.2004
(51) Int. Cl.: A61C 7/12, A61C 7/14

(54) **KIEFERORTHOPÄDISCHES BEFESTIGUNGSELEMENT**
ORTHODONTIC FASTENING ELEMENT
ELEMENT DE FIXATION ORTHODONTIQUE

(30) Priorität: 08.09.2003 DE 10341985
(43) Veröffentlichungstag der Anmeldung: 07.06.2006
(73) Patentinhaber: DENTAURUM J.P. WINKELSTROETER KG, 75228 Ispringen (DE)
(72) Erfinder: PACE, Mark, S., 75177 Pforzheim (DE); REISE, Michael, 75015 Bretten (DE); SERNETZ, Friedrich, 75173 Pforzheim (DE); WIGGER, Klaus, 75245 Neulingen (DE)
(74) Vertreter: Hoeger, Stellrecht & Partner Patentanwälte
(86) Internationale Anmeldenummer: PCT/EP2004/009880
(87) Internationale Veröffentlichungsnummer: WO 2005/025441

(56) Entgegenhaltungen:
- DE-A- 19 603 189
- DE-A- 19 624 647
- US-A- 5 052 926
- US-B1- 6 267 590

## Beschreibung

Die Erfindung betrifft ein kieferorthopädisches Befestigungselement, insbesondere ein Bracket, mit einem Formkörper aus einem nicht-metallischen Material, wobei das Befestigungselement zumindest in einem Teilbereich eine von der Zahnfarbe deutlich abweichende bunte Färbung aufweist.

Kieferorthopädische Befestigungselemente kommen beispielsweise in Form von Brackets und Bukkalröhrchen zum Einsatz, die bei einer kieferorthopädischen Behandlung zur Korrektur der Zahnstellung beim Menschen an den Zähnen festgelegt werden. Zur Herstellung derartiger Befestigungselemente kann rostfreier Stahl herangezogen werden. Dieser weist jedoch einen metallischen Glanz auf und tritt daher in kosmetisch nachteiliger Weise hervor.

Es wurden deshalb erhebliche Anstrengungen unternommen, um den Befestigungselementen ein der Farbe der Zähne angenähertes Aussehen zu verleihen. So wird in der EP 0 337 307 B1 vorgeschlagen, Brackets und Bukkalröhrchen als Aluminiumoxid-Formkörper herzustellen, wobei der Formkörper eine möglichst gute Transparenz im Bereich des sichtbaren Lichtes sowie im Bereich des nahen Ultraviolettlichtes und des nahen Infrarotlichtes aufweisen soll, so daß das Befestigungselement die Farbe des darunterliegenden Zahnes zeigt und sich daher von der Zahnfarbe allenfalls geringfügig abhebt. Das Befestigungselement an sich soll also möglichst nicht erkennbar sein.

In der WO 89/08085 wird ein polykristallines, transluzentes Keramikbracket beschrieben, das an sich neutral farblos ist und aufgrund seiner Lichtdurchlässigkeit die Farbe des darunterliegenden Zahnes annimmt. Auch dieses Bracket soll sich in seiner Farbgestaltung möglichst wenig vom Zahn unterscheiden.

Ein weiteres Keramikbracket wird in der EP 0 297 908 B1 beschrieben. Auch dieses Bracket soll nach Möglichkeit eine hohe Transparenz und allenfalls eine der Farbe der Zähne entsprechende gelbliche Tönung aufweisen, um sich somit vom darunterliegenden Zahn möglichst wenig abzuheben.

Trotz der Zielsetzung, Patienten ein möglichst unauffälliges Bracket bereitzustellen, werden derartige Brackets insbesondere von jüngeren Patienten häufig nur widerwillig akzeptiert.

In der DE 196 03 189 A1 wird deshalb vorgeschlagen, kieferorthopädische Vorrichtungen gemäß dem Oberbegriff des Anspruchs 1, insbesondere Brackets, aus einem Material zu fertigen, das ein leuchtendes, nämlich phosphoreszierendes oder fluoreszierendes Pigment enthält. In Abhängigkeit vom ausgewählten Pigment kann die Vorrichtung bei normalem Tageslicht oder nach Lichtbestrahlung im Dunkeln leuchten. Mit Hilfe der leuchtenden Pigmente, die einem Grundmaterial vorzugsweise mit einem Gewichtsanteil von 10 % bis 15 % zugemischt werden, können unterschiedliche Tageslicht- und Nachleucht-Farben erzeugt werden.

Transparente Brackets heben sich vom darunterliegenden Zahn nur wenig ab. Dies erschwert das exakte Ausrichten und Befestigen der Brackets an den Zähnen, da die Ränder der Brackets nur schlecht zu erkennen sind. Eine möglichst exakte Ausrichtung der Brackets ist jedoch für die gewünschte Korrektur der Zahnstellung sehr wichtig. In der US 5,716,208 A wird deshalb vorgeschlagen, die an sich transparenten Brackets mit einer alkohollöslichen farbigen Beschichtung zu versehen. Aufgrund der farbigen Beschichtung sind die Brackets bei deren Befestigung jeweils an einem Zahn gut zu erkennen. Nach der Befestigung kann die farbige Beschichtung mittels einer Alkohollösung entfernt werden. Auf Wunsch des Patienten kann die Beschichtung auch noch einige Zeit bestehen bleiben, sie verblaßt jedoch nach ein paar Tagen.

Aus der 6,267,590 B1 ist ein Bracket mit einer eingefärbten antimikrabiellen Beschichtung bekannt. Durch die Beschichtung erhält das Bracket eine antimikrobielle Wirkung und durch die Einfärbung ist das Bracket gut erkennbar, so daß dessen Ausrichtung und Befestigung am Zahn vereinfacht wird, Vorzugsweise wird die Einfärbung durch Pigmente erzeugt, die nach dem Befestigen des Brackets abgelöst werden können. Die Beschichtung wird vorzugsweise durch ein Pulverbeschichtungsverfahren auf einen Bracketkörper aufgebracht. Alternativ kann vorgesehen sein, das Material mit antimikrobieller Wirkung mit dem Material des Bracketkörpers zu vermischen und das Gemisch anschließend in Üblicher Weise, beispielsweise durch Spritzgießen, zu verarbeiten.

Aufgabe der vorliegenden Erfindung ist es, ein kieferorthopädisches Befestigungselement der eingangs genannten Art bereitzustellen, das insbesondere bei jüngeren Patienten eine gesteigerte Akzeptanz aufweist, indem es zumindest in einem Teilbereich eine von der Zahnfarbe deutlich abweichende, dauerhafte bunte Färbung zeigt.

Diese Aufgabe wird bei einem kieferorthopädischen Befestigungselement der gattungsgemäßen Art erfingdungsgemäß dadurch gelöst, daß das Befestigungselement ein das Befestigungselement einfärbendes ionendotiertes Keramikmaterial aufweist.

In die Erfindung fließt der Gedanke mit ein, daß insbesondere bei Jugendlichen die Akzeptanz für eine kieferorthopädische Behandlung und damit verbunden für ein am Zahn festsitzendes, letztlich in aller Regel doch sichtbares kieferorthopädisches Befestigungselement in vielen Fällen durch besondere farbliche Akzente des Befestigungselements gesteigert werden kann. Das Befestigungselement setzt sich deshalb zumindest in einem Teilbereich in seiner Farbgebung sehr deutlich vom Zahn ab. Das Befestigungselement kann zumindest bereichsweise beispielsweise eine grelle Farbe aufweisen, insbesondere ein intensives Rot, Gelb, Grün oder Blau. In dem die Färbung aufweisenden Bereich kann die Farbe des Zahns praktisch nicht durch das Befestigungselement hindurch scheinen, zumindest wird die Zahnfarbe vom gefärbten Teilbereich stark verfremdet. Zur Erzielung der Färbung weist das Befestigungselement ionendotiertes Keramikmaterial auf. Mit Hilfe des ionendotierten Keramikmaterials kann eine sehr dauerhafte Färbung erzielt werden.

Durch Wahl eines entsprechenden Dotierungsmaterials können unterschiedlichste Färbungen erzielt werden, insbesondere Färbungen, die von der Zahnfarbe sehr deutlich abweichen und dauerhaft sind. Die Färbungen zeichnen sich vor allem dadurch aus, daß sie sich durch mechanischen oder chemischen Angriff, wie er zum Beispiel bei der Zahnreinigung entsteht, nicht oder nur kaum verändern.

Von Vorteil ist es, wenn das Keramikmaterial ein ionendotiertes oxidisches Keramikmaterial ist. Bevorzugt kommen dotierte Aluminiumoxid-, Zirkoniumoxid- und/oder Dentalkeramikmaterialien zum Einsatz. Mittels derartiger Keramikmaterialien lassen sich praktisch sämtliche Farben des Farbspektrums erzielen, wobei die Farben sehr rein, klar und hell sein können.

Zur Dotierung des Keramikmaterials kommen vorzugsweise polyvalente Ionen zum Einsatz, insbesondere polyvalente Übergangsmetallionen und/oder polyvalente Ionen seltener Erden.

Es kann vorgesehen sein, daß das Keramikmaterial mehrere Dotierungen aufweist. Günstig ist es hierbei, wenn die einzelnen Dotierungsmaterialien jeweils einen Masseanteil bis zu 0,5 % aufweisen, wobei der Masseanteil des gesamten Dotierungsmaterials insgesamt maximal etwa 1 % beträgt. Ein geringer Massenanteil des Dotierungsmaterials ist vorteilhaft, da dadurch die Eigenschaften des Keramikmaterials an sich, beispielsweise dessen Härte und Festigkeit, durch die Dotierung nicht negativ beeinflusst werden, die Eigenschaften des Keramikmaterials bleiben vielmehr praktisch unverändert.

Der verhältnismäßig geringe Masseanteil des gesamten Dotierungsmaterials kann dem erfindungsgemäßen Befestigungselement eine ästhetisch ansprechende farbig transluzente/transparente Erscheinung verleihen. Alternativ kann auch vorgesehen sein, daß das Befestigungselement farbig opak ausgestaltet ist.

Bevorzugt kommen zur Erzielung einer von der Zahnfarbe deutlich abweichenden Färbung Dotierungsmaterialien mit jeweils einem Masseanteil von maximal etwa 0,1 % zum Einsatz, wobei der Masseanteil aller Dotierungsmaterial 0,5 % nicht überschreitet.

Es kann vorgesehen sein, daß der Formkörper des Befestigungselementes aus ionendotiertem Keramikmaterial besteht, das sich durch eine von der Zahnfarbe abweichende, sehr dauerhafte Färbung auszeichnet.

Alternativ oder auch ergänzend kann vorgesehen sein, daß der Formkörper eine Beschichtung mit ionendotiertem Keramikmaterial trägt.

Bei einer vorteilhaften Ausführungsform ist vorgesehen, daß auf den Formkörper eine Beschichtung aus ionendotiertem Keramikmaterial aufgebrannt ist.

Günstig ist es, wenn der Formkörper zumindest in einem unbeschichteten Bereich transparent oder transluzent ausgestaltet ist, denn dadurch tritt der unbeschichtete Bereich des Formkörpers gegenüber dem beschichteten Bereich in seiner Farbgebung sehr stark zurück und das am Zahn festgelegte Befestigungselement nähert sich im unbeschichteten Bereich des Formkörpers der Zahnfarbe, während es sich im beschichteten Bereich des Formkörpers von der Zahnfarbe sehr deutlich abhebt.

Als Beschichtungsmaterial für den Formkörper wird vorzugsweise ionendotiertes oxidisches Keramikmaterial aufgebrannt. Hierbei können insbesondere dotierte Aluminiumoxid-, Zirkoniumoxid- und/oder Dentalkeramikmaterialien herangezogen werden, wie sie voranstehend bereits unter Bezugnahme auf Formkörper aus ionendotierten Keramikmaterialien im einzelnen erläutert wurden. Vorzugsweise erfolgt die Dotierung mittels polyvalenter Ionen, insbesondere mittels polyvalenter Übergangsmetallionen oder polyvalenter Ionen seltener Erden. Die einzelnen Dotierungsmaterialien können wiederum jeweils einen Masseanteil bis zu 0,5 % aufweisen, wobei der Masseanteil aller Dotierungsmaterialien insgesamt maximal etwa 1 % beträgt.

Die nachfolgende Beschreibung bevorzugter Ausführungsformen der Erfindung dient im Zusammenhang mit der Zeichnung der näheren Erläuterung. Es zeigen:
- Figur 1:: eine schaubildliche Darstellung einer ersten Ausführungsform einer erfindungsgemäßen kieferorthopädischen Befestigungsvorrichtung;
- Figur 2:: eine Schnittdarstellung der Befestigungsvorrichtung gemäß Figur 1; und
- Figur 3:: eine Schnittdarstellung einer zweiten Ausführungsform einer erfindungsgemäßen kieferorthopädischen Befestigungsvorrichtung.

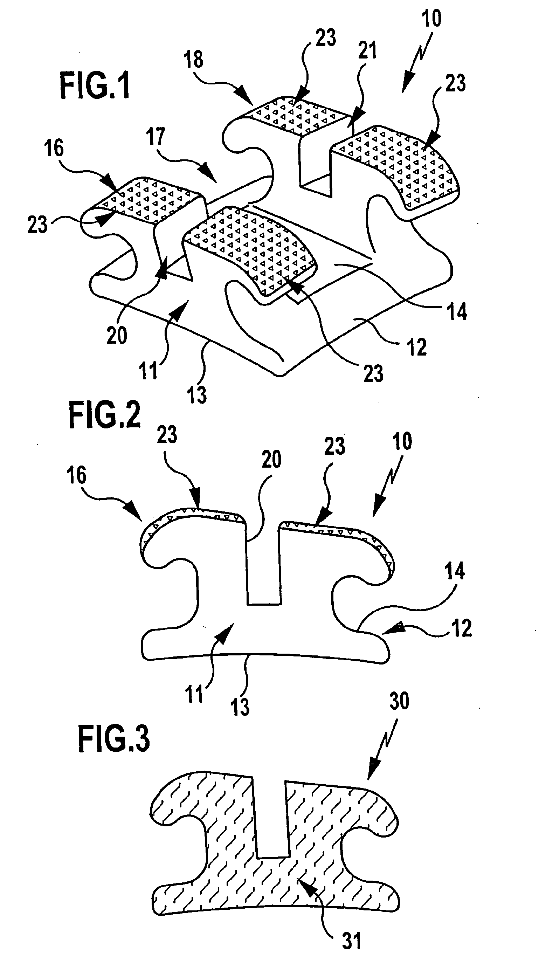

In den Figuren 1 und 2 ist eine erste Ausführungsform einer erfindungsgemäßen kieferorthopädischen Befestigungsvorrichtung in Form eines insgesamt mit dem Bezugszeichen 10 belegten Brackets dargestellt. Dieses umfaßt einen Formkörper 11 mit einer Basis 12, die mit ihrer Rückseite 13 an einem Zahn befestigt werden kann und im Bereich ihrer Vorderseite 14 einstückig übergeht in ein erstes Halteflügelpaar 16 und ein von diesem über eine Quernut 17 getrenntes zweites Halteflügelpaar 18. Die beiden Halteflügelpaare 16 und 18 weisen jeweils eine Längsnut 20 bzw. 21 auf zur Aufnahme eines Drahtes, dessen Federkräfte zur kieferorthopädischen Behandlung auf das Bracket und damit auf den Zahn übertragen werden.

Der Formkörper 11 ist aus Aluminiumoxidpulver hergestellt, das in üblicher Weise gepreßt und gesintert wurde. Derartige Preß- und Sinterverfahren sind dem Fachmann beispielsweise aus der EP 0 297 908 B1 bekannt. Der Formkörper 11 weist eine hohe Transparenz für sichtbares Licht sowie für Licht aus dem nahen Ultraviolett- und Infrarotbereich auf, so daß die Zahnfarbe hindurch scheinen kann.

Auf ihrer Frontseite, die bei Einsatz des Brackets 10 den Lippen des Patienten zugewandt ist, tragen die beiden Halteflügelpaare 16 und 18 jeweils eine auf den Formkörper 11 aufgebrannte Beschichtung 23 aus ionendotiertem Keramikmaterial. Die Beschichtung verleiht dem Bracket 10 in diesen Bereichen eine von der Zahnfarbe des Patienten deutlich abweichende, dauerhafte bunte Färbung. Es kann beispielsweise vorgesehen sein, daß die Beschichtung 23 blau, gelb, grün oder rot ist.

Durch die Beschichtung 23 aus ionendotiertem Keramikmaterial erhält das Bracket 10 im Bereich seiner Frontseite eine grelle Färbung, durch die gerade bei jüngeren Patienten die Akzeptanz für derartige Brackets gesteigert werden kann. Als Keramikmaterial kann beispielsweise ein Aluminiumoxid-, Zirkoniumoxid- oder Dentalkeramikmaterial verwendet werden. Die Dotierung erfolgt mittels polyvalenter Ionen, wobei je nach zum Einsatz kommendem Dotierungsmaterial eine Vielzahl unterschiedlicher dauerhafter Färbungen erzielt werden können, durch die die Akzeptanz des Brackets 30 gerade bei jugendlichen Patienten gesteigert wird.

In Figur 3 ist eine alternative Ausgestaltung eines kieferorthopädischen Befestigungselements in Form eines insgesamt mit dem Bezugszeichen 30 belegten Brackets dargestellt. Dieses ist hinsichtlich seiner Formgebung identisch ausgebildet wie das voranstehend unter Bezugnahme auf die Figuren 1 und 2 erläuterte Bracket 10. Zur Vermeidung von Wiederholungen wird diesbezüglich auf die voranstehenden Erläuterungen Bezug genommen. Das Bracket 30 unterscheidet sich vom Bracket 10 dadurch, daß es aus einem Formkörper 31 hergestellt ist, der aus ionendotiertem Keramikmaterial besteht und daher eine von der Zahnfarbe des Patienten deutlich abweichende, dauerhafte bunte Färbung aufweist, ohne daß hierzu eine zusätzliche Farbschicht oder Beschichtung erforderlich ist. Für den Formkörper 31 kann ein Aluminiumoxid- oder auch ein Zirkoniumoxid-oder Dentalkeramik-Material zum Einsatz kommen, das durch die Dotierung eingefärbt ist.

## Patentansprüche

1. Kieferorthopädisches Befestigungselement, insbesondere Bracket, mit einem Formkörper aus einem nicht-metallischen Material, wobei das Befestigungselement (10; 30) zumindest in einem Teilbereich eine von der Zahnfarbe deutlich abweichende, dauerhafte bunte Färbung aufweist, **dadurch gekennzeichnet, daß** das Befestigungselement (10; 30) ein das Befestigungselement (10; 30) einfärbendes ionendotiertes Keramikmaterial aufweist.

2. Befestigungselement nach Anspruch 1, **dadurch gekennzeichnet, daß** das Keramikmaterial ein ionendotiertes oxidisches Keramikmaterial ist.

3. Befestigungselement nach Anspruch 2, **dadurch gekennzeichnet, daß** das Keramikmaterial ein ionendotiertes Aluminiumoxid-, Zirkoniumoxid- und/oder Dentalkeramikmaterial ist.

4. Befestigungselement nach Anspruch 1, 2 oder 3, **dadurch gekennzeichnet, daß** das Keramikmaterial mit polyvalenten Ionen dotiert ist.

5. Befestigungselement nach Anspruch 4, **dadurch gekennzeichnet, daß** das Keramikmaterial mit polyvalenten Übergangsmetallionen und/oder polyvalenten Ionen seltener Erden dotiert ist.

6. Befestigungselement nach Anspruch 4 oder 5, **dadurch gekennzeichnet, daß** die einzelnen Dotierungsmaterialien jeweils einen Masseanteil bis zu 0,5 % aufweisen, wobei der Masseanteil des gesamten Dotierungsmaterials insgesamt maximal etwa 1 % beträgt.

7. Befestigungselement nach einem der voranstehenden Ansprüche, **dadurch gekennzeichnet, daß** der Formkörper (31) aus ionendotiertem Keramikmaterial besteht.

8. Befestigungselement nach einem der voranstehenden Ansprüche, **dadurch gekennzeichnet, daß** der Formkörper (11) eine Beschichtung (23) mit ionendotiertem Keramikmaterial trägt.

9. Befestigungselement nach Anspruch 8, **dadurch gekennzeichnet, daß** auf den Formkörper (11) eine Beschichtung (23) aus ionendotiertem Keramikmaterial aufgebrannt ist.

10. Befestigungselement nach Anspruch 9, **dadurch gekennzeichnet, daß** das Beschichtungsmaterial ein ionendotiertes Keramikmaterial nach einem der Ansprüche 2 bis 6 ist.

11. Befestigungselement nach Anspruch 8, 9 oder 10, **dadurch gekennzeichnet, daß** der Formkörper (11) zumindest in einem unbeschichteten Bereich transparent oder transluzent ausgestaltet ist.

## Claims

1. Orthodontic fastening element, in particular, bracket, with a moulding made of a non-metallic material, the fastening element (10; 30) having at least in a partial region a lasting coloured tint that is distinctly different from the colour of the teeth, **characterized in that** the fastening element (10; 30) comprises an ion-doped ceramic material colouring the fastening element (10; 30).

2. Fastening element as claimed in claim 1, **characterized in that** the ceramic material is an ion-doped oxidic ceramic material.

3. Fastening element as claimed in claim 2, **characterized in that** the ceramic material is an ion-doped aluminium oxide, zirconium oxide and/or dental ceramic material.

4. Fastening element as claimed in claim 1, 2 or 3, **characterized in that** the ceramic material is doped with polyvalent ions.

5. Fastening element as claimed in claim 4, **characterized in that** the ceramic material is doped with polyvalent transition metal ions and/or polyvalent rare earth ions.

6. Fastening element as claimed in claim 4 or 5, **characterized in that** the individual doping materials are respectively in a proportion by mass of up to 0.5%, the proportion by mass of the entire doping material altogether being about 1% at most.

7. Fastening element as claimed in one of the preceding claims, **characterized in that** the moulding (31) consists of ion-doped ceramic material.

8. Fastening element as claimed in one of the preceding claims, **characterized in that** the moulding (11) has a coating (23) with ion-doped ceramic material.

9. Fastening element as claimed in claim 8, **characterized in that** a coating (23) of ion-doped ceramic material is baked onto the moulding (11).

10. Fastening element as claimed in claim 9, **characterized in that** the coating material is an ion-doped ceramic material as claimed in one of claims 2 to 6.

11. Fastening element as claimed in claim 8, 9 or 10, **characterized in that**, at least in an uncoated region, the moulding (11) is made transparent or translucent.

## Revendications

1. Elément de fixation orthodontique, notamment bague ou attache dite "bracket", comprenant un corps de forme en un matériau non métallique, l'élément de fixation (10 ; 30) présentant, au moins sur une zone partielle, une coloration permanente d'une couleur quelconque se distinguant nettement de la couleur des dents, **caractérisé en ce que** l'élément de fixation (10 ; 30) comprend un matériau céramique dopé en ions, qui colore l'élément de fixation (10 ; 30).

2. Elément de fixation selon la revendication 1, **caractérisé en ce que** le matériau céramique est une céramique-oxyde dopée en ions.

3. Elément de fixation selon la revendication 2, **caractérisé en ce que** le matériau céramique est un matériau céramique du type oxyde d'aluminium, du type oxyde de zirconium et/ou du type matériau céramique dentaire, dopé en ions.

4. Elément de fixation selon la revendication 1, 2 ou 3, **caractérisé en ce que** le matériau céramique est dopé en ions polyvalents.

5. Elément de fixation selon la revendication 4, **caractérisé en ce que** le matériau céramique est dopé en ions de métal transitoire polyvalents et/ou en ions polyvalents de terres rares.

6. Elément de fixation selon la revendication 4 ou 5, **caractérisé en ce que** les matériaux de dopage individuels représentent chacun une teneur en masse pouvant aller jusqu'à 0,5%, la teneur en masse de l'ensemble du matériau de dopage valant au maximum environ 1%.

7. Elément de fixation selon l'une des revendications précédentes, **caractérisé en ce que** le corps de forme (31) est réalisé en un matériau céramique dopé en ions.

8. Elément de fixation selon l'une des revendications précédentes, **caractérisé en ce que** le corps de forme (11) porte un revêtement (23) avec du matériau céramique dopé en ions.

9. Elément de fixation selon la revendication 8, **caractérisé en ce que** sur le corps de forme (11) est rapporté, par cuisson, un revêtement (23) en un matériau céramique dopé en ions.

10. Elément de fixation selon la revendication 9, **caractérisé en ce que** le matériau de revêtement est un matériau céramique dopé en ions selon l'une des revendications 2 à 6.

11. Elément de fixation selon la revendication 8, 9 ou 10, **caractérisé en ce que** le corps de forme (11) est de configuration transparente ou translucide au moins dans une zone non revêtue.
